# EUROPÄISCHE PATENTSCHRIFT

(11) **EP 2 513 510 B1**
(45) Veröffentlichungstag und Bekanntmachung des Hinweises auf die Patenterteilung: **18.04.2018**
(21) Anmeldenummer: 09805918.1
(22) Anmeldetag: 18.12.2009
(51) Int. Cl.: F16H 1/32

(54) **GETRIEBE**
TRANSMISSION
TRANSMISSION

(43) Veröffentlichungstag der Anmeldung: 24.10.2012
(73) Patentinhaber: Spinea S.R.O., 08005 Presov (SK)
(72) Erfinder: JANEK, Bartolomej, 08001 Presov (SK)
(74) Vertreter: Jeck, Anton
(86) Internationale Anmeldenummer: PCT/EP2009/009141
(87) Internationale Veröffentlichungsnummer: WO 2011/072707

(56) Entgegenhaltungen:
- EP-A1- 0 594 549
- WO-A1-95/22017
- CH-A- 493 759
- DE-A1-102008 029 696
- JP-A- 51 146 663

## Beschreibung

Die Erfindung betrifft ein Getriebe gemäß dem Oberbegriff des Anspruchs 1.

Getriebe der eingangs genannten Art sind z. B. in der WO95/22017 beschrieben. Ein solches Getriebe weist einen mit einer Innenverzahnung versehenen sowie eine Drehachse aufweisenden hohlzylinderartigen Grundkörper mit Stirnseiten auf. In dem Grundkörper sind ein angetriebenes Eingangsorgan sowie ein Ausgangsorgan um die Drehachse drehbar gelagert. Das Ausgangsorgan umfasst zwei mit Abstand zueinander angeordnete Drehkörper mit einem quer zur Drehachse kreisrunden Querschnitt. Die Drehachse steht senkrecht auf den beiden Drehkörpern. Die Drehkörper sind fest miteinander verbindbar bzw. verbunden. Zwischen den Drehkörpern sind mindestens ein das Innenzahnrad kämmendes Zahnrad sowie auch als transformierende Mittel bzw. Transformationsmittel bezeichnete Mittel zur Umwandlung von Planetenbewegungen des Zahnrads in Rotationsbewegungen des Ausgangsorgans angeordnet. Diese transformierenden Mittel bzw. Transformationsmittel bzw. Mittel zur Umwandlung von Planetenbewegungen des Zahnrads in Rotationsbewegungen des Ausgangsorgans weisen eine zentrale Öffnung auf, durch die das Eingangsorgan hindurchführt, sowie vier um die zentrale Öffnung in Form eines Kreuzes gleichmäßig verteilt angeordnete paarweise gegenüberliegende Arme. Das Eingangsorgan ist in den Drehkörpern des Ausgangsorgans beidseitig gelagert, welches wiederum in dem hohlzylinderartigen Grundkörper beidseitig gelagert ist.

Getriebe der genannten Art haben den Nachteil, dass die, vereinfacht gesprochen, die Form eines Kreuzes aufweisenden transformierenden Mittel nur mit großem technischem Aufwand herstellbar sind. Zudem ist die Kräfteverteilung innerhalb des Kreuzes während der bei der Umwandlung der Planetenbewegung in die Drehbewegung gleichzeitig erfolgenden Drehmomentübertragung auf das Ausgangsorgan ungünstig, zumal es sich um ein in Bezug auf die auftretenden Kräfte "offene" System handelt.

Durch WO 2007/135540 A2 sind Getriebe bekannt mit einer während des Betriebs verstellbaren Drehmomentübertragung. Jedes der Getriebe weist hierzu wenigstens ein feststehendes und in zwei axial beabstandete Partien geteiltes Rad auf, um das ein Riemen mit einer Länge größer als der Umfang des Rads gelegt ist. Zwischen den beiden Partien des feststehenden Rads ist ein Satellitenrad angeordnet. Das Satellitenrad hat einen anderen Durchmesser, als das feststehende Rad. Ein Eingangs- und ein Ausgangsorgan sind koaxial zu einer Drehachse angeordnet. Das Eingangsorgan hat wenigstens einen Abschnitt mit einer verstellbaren Exzentrizität, auf dem zumindest ein Satellitenrad angeordnet ist. Durch Drehen des Eingangsorgans wälzt das Satellitenrad auf der Innenfläche des Riemens ab. Durch zunehmende Exzentrizität wird die Reibung zwischen Satellitenrad und Riemen erhöht, so dass ein höheres Drehmoment übertragen wird. Die Umwandlung der Planetenbewegung des Satellitenrads in eine Drehbewegung des Ausgangsorgans geschieht je nach Ausgestaltung des Getriebes auf unterschiedliche Art und Weise:
- Ist nur ein Satellitenrad vorgesehen, besteht das Ausgangsorgan aus einem einseitig des Satellitenrads angeordneten Drehkörper. In diesem Fall kann ein ringförmiges Transformationsmittel zwischen Satellitenrad und Ausgangsorgan vorgesehen sein. Beide Stirnseiten des Rings weisen dabei jeweils zwei Führungsmittel mit Mittelachsen auf. Die Mittelachsen der Führungsmittel einer Stirnseite verlaufen dabei senkrecht zu einer Axialebene, während die Mittelachsen der Führungsmittel der anderen Stirnseite parallel zur Axialebene verlaufen.
- Sind zwei oder mehrere Satellitenräder vorgesehen, besteht das Ausgangsorgan aus zwei mittels Distanzkörpern miteinander verbundenen und in Richtung der Drehachse axial voneinander beabstandeten Drehkörpern. In diesem Fall bewegen sich die Satellitenräder um 180° phasenversetzt und die Umwandlung der Planetenbewegungen in eine Rotationsbewegung des Ausgangsorgans erfolgt unmittelbar über die Distanzkörper. Die Distanzkörper sind hierzu durch außermittige Öffnungen in den Satellitenrädern geführt. Jeder der Distanzkörper hat dabei in jeder Öffnung, die er quert, ständig und in jeder Konstellation Linienkontakt mit dem jeweiligen Satellitenrad.

Die letztbeschriebene Art der Umwandlung von Planetenbewegungen in Rotationsbewegungen ist gemeinhin beispielsweise durch US 1,767,866, EP 0 474 897 A1, EP 1 816 374 A1, US 3,129,611 und PL 169808B sowohl bei Getrieben bekannt, die, wie eingangs beschrieben, ein Ausgangsorgan aufweisen, das aus zwei mittels Distanzkörpern miteinander verbundenen und in Richtung der Drehachse axial voneinander beabstandeten Drehkörpern und mindestens einem zwischen den Drehkörpern angeordneten, Planetenbewegungen ausführenden und eine Innenverzahnung kämmenden Zahnrad besteht. Weiterhin ist es auch bei Getrieben bekannt, die ein Ausgangsorgan aufweisen, das aus nur einem Drehkörper mit auf diesem außermittig angeordneten, sich in axialer Richtung der Drehachse erstreckenden Stiften besteht, welche in außermittige Öffnungen in einem oder in mehreren axial zu dem Drehkörper versetzt angeordneten und Planetenbewegungen ausführenden, eine Innenverzahnung kämmende Zahnrädern ragen. Jeder Distanzkörper bzw. Stift hat dabei in jeder Öffnung, die er quert, immer und in jeder Konstellation Linienkontakt mit dem jeweiligen Zahnrad.

Durch FR 797 130 A ist ein Getriebe mit veränderlichem Übersetzungsverhältnis und ein Getriebe mit festem Übersetzungsverhältnis bekannt. Beide Getriebe umfassen jeweils ein Gehäuse, das eine Drehachse aufweist, sowie ein Eingangsorgan und ein Ausgangsorgan, die beide um die Drehachse drehbar gelagert in dem Gehäuse angeordnet sind. Das Eingangsorgan hat einen exzentrischen Abschnitt, auf dem ein Zahnrad angeordnet ist. Das Zahnrad kämmt eine in dem Gehäuse angeordnete Innenverzahnung. Durch Drehung des Eingangsorgans führt das Zahnrad eine Planetenbewegung aus. Das Ausgangsorgan besteht aus einem einseitig des Zahnrads angeordneten Drehkörper. Transmissionsmittel zur Umwandlung von Planetenbewegungen in Rotationsbewegungen des Ausgangsorgans sind zwischen dem Drehkörper des Ausgangsorgans und dem Zahnrad angeordnet. Die Transmissionsmittel bestehen aus einem Ring. Beide Stirnseiten des Rings weisen jeweils zwei Führungsmittel mit Mittelachsen auf. Die Mittelachsen der Führungsmittel einer Stirnseite verlaufen dabei senkrecht zu einer Axialebene, während die Mittelachsen der Führungsmittel der anderen Stirnseite parallel zur Axialebene verlaufen. In dem Gehäuse des Getriebes mit veränderlichem Übersetzungsverhältnis ist außerdem ein Zahnkranz mit einer Außenverzahnung und mit einer Innenverzahnung um die Drehachse drehbar gelagert angeordnet. In das Gehäuse reicht eine Schnecke, welche die Außenverzahnung des Zahnkranzes kämmt. Die Schnecke kann von einem Elektromotor mit variabler Geschwindigkeit angetrieben werden, wobei sich mit der Geschwindigkeit das Übersetzungsverhältnis zwischen Eingangsorgan und Ausgangsorgan verändert.

Durch JP 1 143 171 A sind Getriebe mit veränderlichem Übersetzungsverhältnis bekannt. Die Getriebe weisen ein Gehäuse mit einer Drehachse sowie ein Eingangsorgan und ein Ausgangsorgan auf, die beide um die Drehachse drehbar gelagert in dem Gehäuse angeordnet sind. Das Eingangsorgan hat wenigstens einen exzentrischen Abschnitt, auf dem zumindest ein Zahnrad angeordnet ist. Das Zahnrad kämmt eine Innenverzahnung. Durch Drehung des Eingangsorgans führt das Zahnrad eine Planetenbewegung aus. Die Innenverzahnung befindet sich in einer in dem Gehäuse drehbar gelagert angeordneten Glocke. Die Glocke ist mit variabler Geschwindigkeit antreibbar. Mit der Geschwindigkeit ändert sich das Übersetzungsver hältnis. Das Ausgangsorgan besteht aus einem einseitig des mindestens einen Zahnrads angeordneten Drehkörper. Bei einem Getriebe mit nur einem Zahnrad sind ringförmige Transmissionsmittel zur Umwandlung von Planetenbewegungen in Rotationsbewegungen des Ausgangsorgans zwischen dem Drehkörper des Ausgangsorgans und dem Zahnrad angeordnet. Beide Stirnseiten des Rings weisen jeweils zwei Führungsmittel mit Mittelachsen auf. Die Mittelachsen der Führungsmittel einer Stirnseite verlaufen dabei senkrecht zu einer Axialebene, während die Mittelachsen der Führungsmittel der anderen Stirnseite parallel zur Axialebene verlaufen. Bei einem Getriebe mit zwei bei einer Drehung des Eingangsorgans um 180° phasenversetzte Planetenbewegungen ausführenden Zahnrädern weisen die Zahnräder außermittige Öffnungen auf. Durch diese ragen Stifte hindurch, welche sich in axialer Richtung der Drehachse erstreckend auf dem einseitig der Zahnräder angeordneten Drehkörper außermittig angeordnet sind. Jeder Stift hat dabei in jeder außermittigen Öffnung, die er quert, immer und in jeder Konstellation Linienkontakt mit dem jeweiligen Zahnrad.

Nachteilig an den bekannten Getrieben ist, dass Sie aufgrund ihres Aufbaus nur begrenzt belastbar sind, sei es weil:
- sie nur einen Drehkörper als Ausgangsorgan aufweisen, auf den einseitig mit oder ohne Hilfe eines Transformationsmittels zur Umwandlung von Planetenbewegungen des Zahnrads in Rotationsbewegungen des Ausgangsorgans ein Drehmoment übertragen wird oder
- sie zwar zwei miteinander verbundene, durch Distanzkörper axial voneinander beabstandete Drehkörper als Ausgangsorgan aufweisen, jedoch die Übertragung des Drehmoments unter gleichzeitiger Umwandlung der Planetenbewegung der zwischen den Drehkörpern angeordneten Räder in eine Rotationsbewegung des Ausgangsorgans unmittelbar von den Rädern über die Distanzkörper erfolgt oder
- zwischen Zahnrad und Ausgangsorgan Transformationsmittel in Form eines Kreuzes vorgesehen sind, die ein in Bezug auf die bei der Übertragung eines Drehmoments auftretenden Kräfte offenes System bilden.

Ausgehend von dem obigen Stand der Technik liegt der Erfindung die Aufgabe zugrunde, hier Abhilfe zu schaffen.

Die gestellte Aufgabe wird durch die Merkmale des Anspruchs 1 gelöst.

Ein Getriebe mit den Merkmalen des Anspruchs 1 umfasst demnach einen eine Innenverzahnung sowie eine Drehachse aufweisenden hohlzylinderartigen Grundkörper mit Stirnseiten, in dem ein angetriebenes Eingangsorgan sowie ein Ausgangsorgan drehbar gelagert sind. Das Ausgangsorgan umfasst zwei unverdrehbar miteinander verbindbare bzw. verbundene, einen quer zur Drehachse kreisrunden Querschnitt aufweisenden Drehkörper mit Distanzkörpern. Zwischen den Distanzkörpern sind mindestens ein Zahnrad sowie mindestens ein Mittel zur Umwandlung von Planetenbewegungen des Zahnrads in Rotationsbewegungen des Ausgangsorgans angeordnet. Erfindungsgemäß ist dabei vorgesehen, dass das kurz auch als Mittel bezeichnete transformierende Mittel bzw. Transformationsmittel bzw. Mittel zur Umwandlung von Planetenbewegungen des Zahnrads in Rotationsbewegungen des Ausgangsorgans die Form eines eine zentrale Öffnung aufweisenden Rings besitzt. An beiden Stirnseiten des mindestens einen Mittels sind jeweils mindestens zwei Führungsmittel angeordnet. Die jeweils auf einer Stirnseite angeordneten Führungsmittel weisen jeweils eine Mittelachse auf. Die jeweils auf einer Stirnseite angeordneten Führungsmittel sind derart auf gegenüberliegenden Seiten der zentralen Öffnung angeordnet, dass deren Mittelachsen vorzugsweise ineinander fallen bzw. vorzugsweise eine gemeinsame Mittelachse bilden. Darüber hinaus verlaufen die Mittelachsen der Führungsmittel einer Stirnseite senkrecht zu einer Axialebene, während die Mittelachsen der Führungsmittel der anderen Stirnseite parallel zu dieser Axialebene verlaufen. Mit anderen Worten verlaufen die Mittelachsen der Führungsmittel der einen Stirnseite senkrecht zu den Mittelachsen der Führungsmittel der anderen Stirnseite. Dabei verlaufen gleichzeitig die Mittelachsen aller Führungsmittel senkrecht zur Drehachse und, genauer ausgedrückt, senkrecht zu Ebenen, in welchen jeweils die Drehachse liegt bzw. welche durch die Drehachse gebildet werden. D.h. eine durch den Ring gebildete, parallel zu den Stirnseiten liegende Ringebene verläuft senkrecht zur Drehachse, wobei die Mittelachsen der Führungsmittel parallel zu dieser Ringebene verlaufen. Der Ring weist außerdem durchgehende, axial ausgerichtete Öffnungen auf, die von Distanzkörpern kontaktfrei durchquert sind, vorzugsweise von den die Drehkörper des Ausgangsorgans unverdrehbar miteinander verbindenden Distanzkörpern.

Man erkennt, dass die Erfindung jedenfalls dann verwirklicht ist, wenn es sich um ein Getriebe handelt, bei dem das bzw. die transformierenden Mittel bzw. Transformationsmittel bzw. Mittel zur Umwandlung von Planetenbewegungen des Zahnrads in Rotationsbewegungen des Ausgangsorgans die Form eines Rings, also ein in Bezug auf die auftretenden Kräfte geschlossenes System, aufweist, bei dem die Führungsmittel stirnseitig positioniert sind. Die Führungsmittel können in Form von Vorsprüngen oder Ausnehmungen ausgebildet sein, die mit entsprechenden Partien der Drehkörper in Wirkverbindung stehen. Ringartige Mittel sind einfacher herstellbar als Kreuze und haben eine höhere Festigkeit. Außerdem weisen ringartige Mittel durch eine homogene Spannungsverteilung eine bessere Kräfteverteilung im verwendeten Werkstoff auf. Sie sind damit bei gleichem Material- bzw. Werkstoffaufwand, d.h. bei gleichem verwendeten Werkstoff und gleichem Gewicht, höher belastbar als ein nach dem Stand der Technik verwendetes Kreuz. Darüber hinaus können sie bei gleicher Belastbarkeit im Vergleich zu einem solchen Kreuz entweder aus einem kostengünstigeren und gegebenenfalls einfacher zu ver- und bearbeitenden Werkstoff hergestellt werden oder ein geringeres Gewicht aufweisen.

Weitere zweckmäßige und vorteilhafte Ausgestaltungen der Erfindung gehen aus den Unteransprüchen hervor.

Ein Ausführungsbeispiel der Erfindung ist in der Zeichnung schematisch dargestellt und wird im Folgenden näher erläutert. Es zeigen:
- Fig. 1: ein Getriebe in Explosionsdarstellung
- Fig. 2: das Getriebe nach Fig. 1 im zusammengebauten Zustand
- Fig. 3: einen Schnitt entlang der Linie A-A nach Fig. 2
- Fig. 4: einen Schnitt entlang der Linie B-B nach Fig. 2
- Fig. 5: den ersten Drehkörper in perspektivischer Ansicht
- Fig. 6: ein Mittel in perspektivischer Ansicht
- Fig. 7: ein Zahnrad in perspektivischer Ansicht und
- Fig. 8: den zweiten Drehkörper in perspektivischer Ansicht

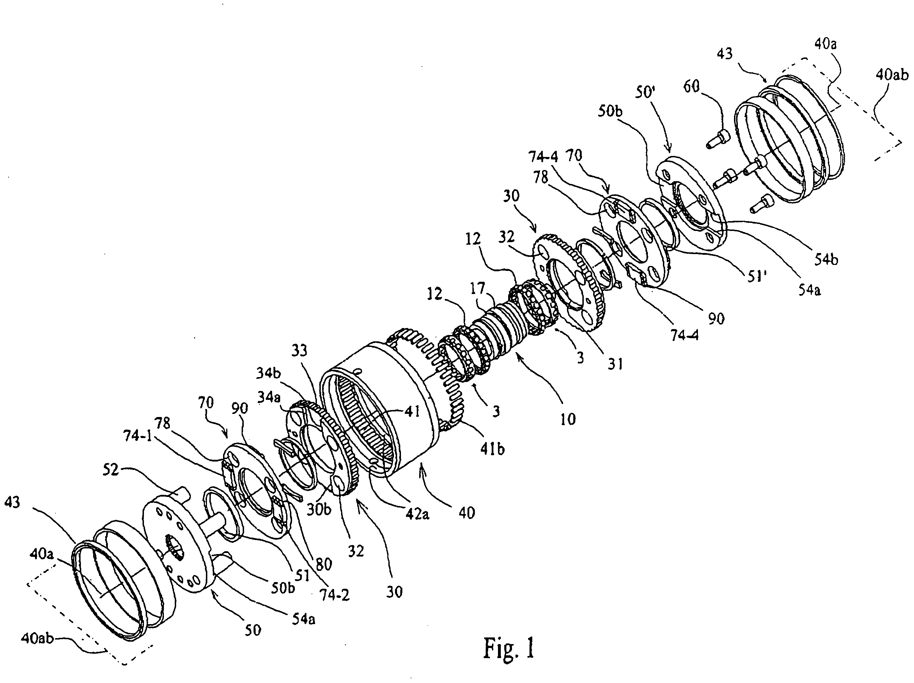

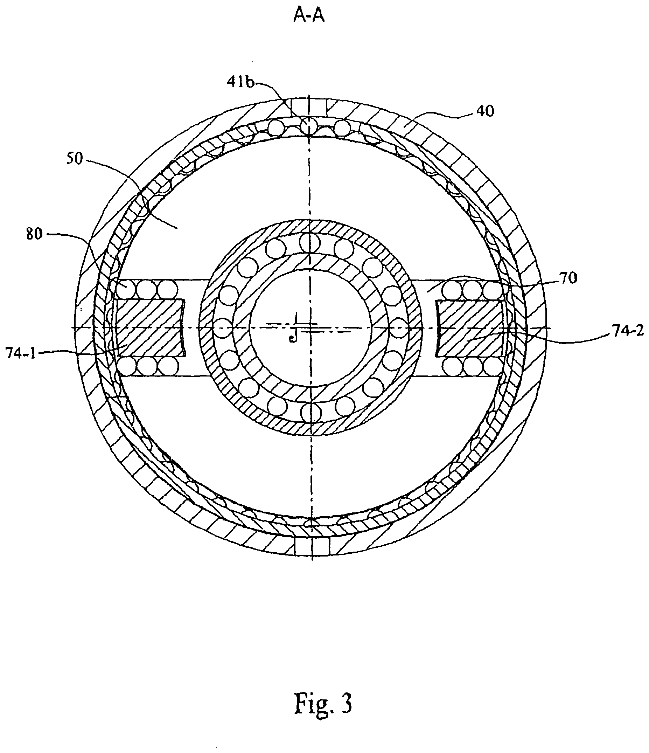

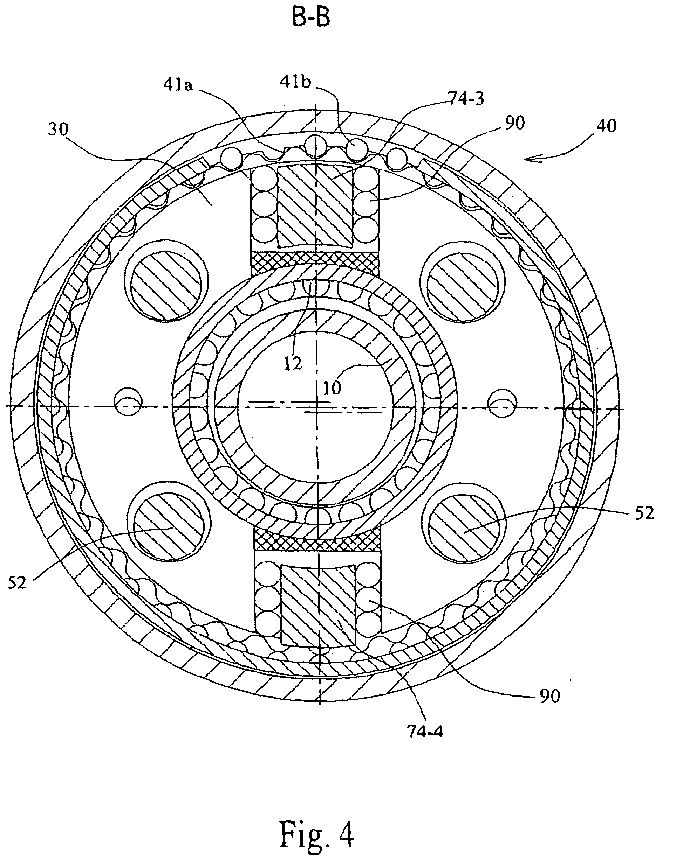

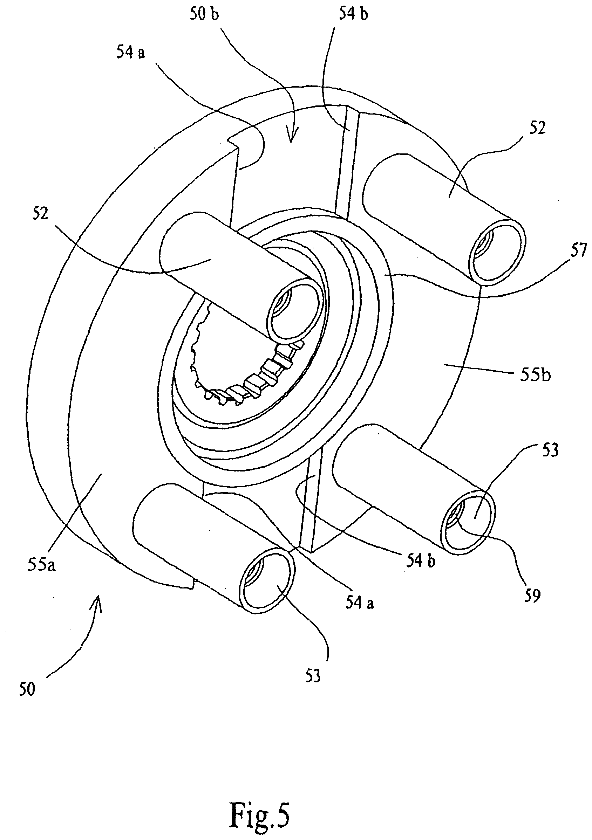

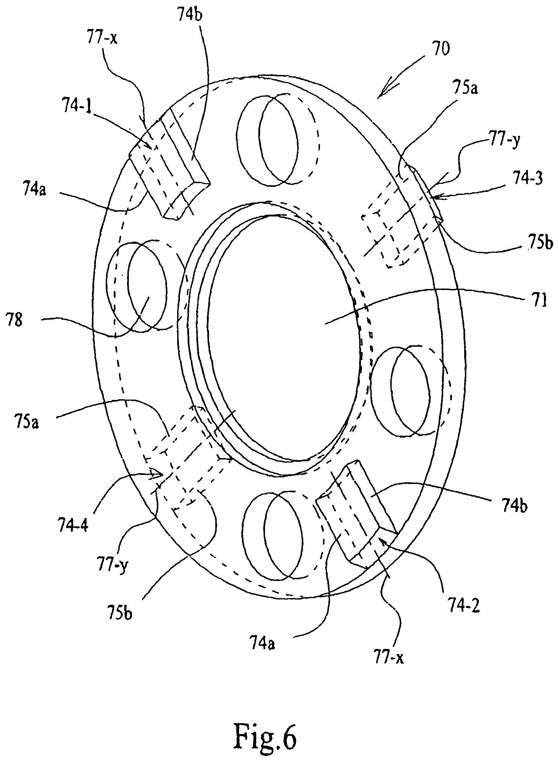

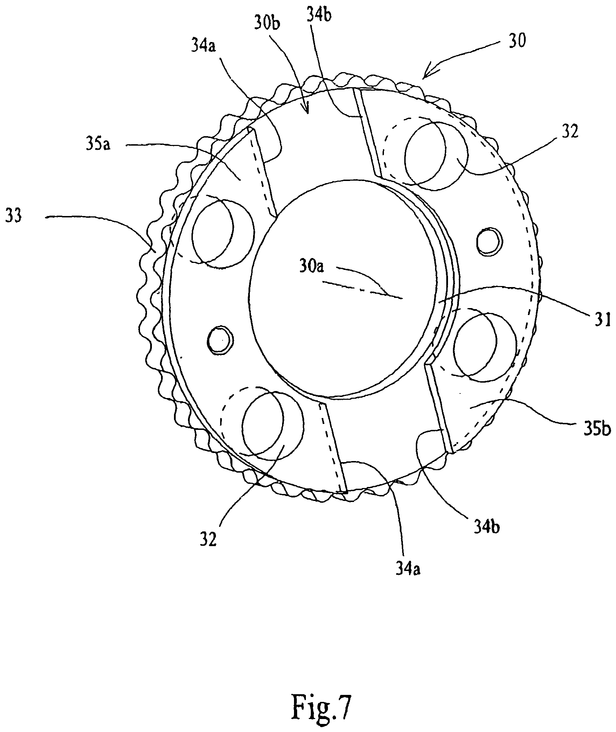

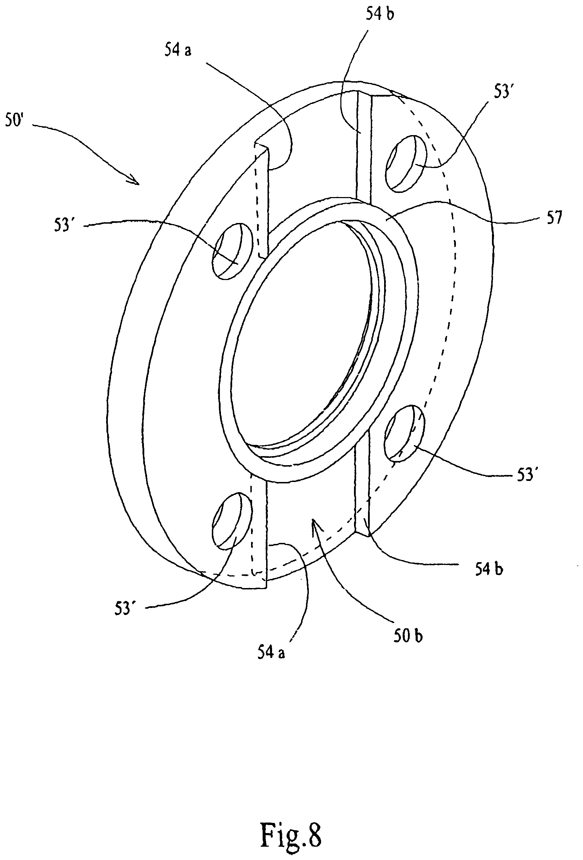

Die in den Fig. 1 bis 8 vollständig oder teilweise dargestellten Getriebe bestehen alle aus einem eine Innenverzahnung 41 sowie eine Drehachse 40a aufweisenden hohlzylinderartigen Grundkörper 40 mit Stirnseiten 49, in dem ein angetriebenes Eingangsorgan 10 sowie ein Ausgangsorgan drehbar gelagert sind. Das Ausgangsorgan umfasst zwei Drehkörper 50, 50'. Die Drehkörper 50, 50' sind im Wesentlichen scheibenförmig ausgebildet. Die scheibenförmigen Partien der Drehkörper 50, 50' sind mit Distanzkörpern 52 mit Abstand zueinander angeordnet. Die Drehkörper 50, 50' sind fest miteinander verbindbar bzw. verbunden. Die Drehkörper 50, 50' weisen quer zur Drehachse 40a einen kreisrunden Querschnitt auf. Zwischen den Drehkörpern 50, 50' sind zwei Zahnräder 30 angeordnet. Die Zahnräder 30 kämmen mit ihren Außenverzahnungen 33 mit der Innenverzahnung 41 des Grundkörpers 40. Zwischen den Drehkörpern 50, 50' sind außerdem Mittel zur Umwandlung von Planetenbewegungen der Zahnräder 30 in Rotationsbewegungen des Ausgangsorgans angeordnet. Die Mittel sind in Form von Transformationselementen 70 ausgebildet. Darüber hinaus ist ein mit der Stirnseite 49 fest verbindbarer, nicht dargestellter ringartiger Haltekörper vorgesehen. Der Drehkörper 50 stützt sich über Wälzelemente sowohl in axialer als auch in radialer Richtung unmittelbar am Grundkörper 40 und am an der Stirnseite 49 angeordneten Haltekörper ab.

Der funktionale Aufbau der zwischen den Drehkörpern 50, 50' in dem Grundkörper 40 angeordneten beweglichen Teile ist dabei in allen in den Figuren dargestellten Ausführungsbeispielen identisch. Ein Eingangsorgan 10 in Form einer Eingangswelle weist zwei exzentrische Abschnitte 17 auf, die um 180° gegeneinander versetzt angeordnet sind. Die exzentrischen Abschnitte 17 sind um eine Exzentrizität e gegenüber der Drehachse 40a versetzt. Auf jedem der exzentrischen Abschnitte 17 ist ein Zahnrad 30 drehbar gelagert. Die Exzentrizität e entspricht somit dem Abstand zwischen der Achse 30a eines Zahnrads 30 und der Drehachse 40a des Grundkörpers 40. Zwischen den exzentrischen Abschnitten 17 und den Zahnrädern 30 sind zur Verringerung der Reibungsverluste Wälzelemente 12 angeordnet, welche jeweils am Außenumfang der exzentrischen Abschnitte 17 abrollen. Hierzu sind am Umfang der exzentrischen Abschnitte 17 Laufbahnen für die Wälzelemente 12 ausgebildet, die als Lagerkörper für die Zahnräder 30 dienen. Die Zahnräder 30 weisen Außenverzahnungen 33 und zentrale Öffnungen mit inneren Laufflächen 31 für die Wälzkörper 12 auf.

Die Zahnräder 30 haben jeweils mehrere, in radialer Richtung zu der die innere Lauffläche 31 aufweisenden zentralen Öffnung versetzt angeordnete, durchgehende axiale Öffnungen 32, die jeweils gleichmäßig um die Achsen 30a der Zahnräder 30 verteilt sind. Die Achsen 30a der Zahnräder 30 verlaufen parallel zur Drehachse 40a des Eingangsorgans 10 und eines durch zwei Drehkörper 50, 50' gebildeten Ausgangsorgans. Die Drehachse 40a ist gleichzeitig die Symmetrieachse des Grundkörpers 40. Das Eingangsorgan 10 kann z. B. mittels einer Feder mit einer Motorwelle eines Antriebsmotors verbunden werden. Der Antriebsmotor kann mit dem als Hohlrad ausgebildeten Grundkörper 40 mit Innenverzahnung 41 z. B. mittels eines nicht dargestellten Deckels und Schrauben verbunden sein. Der Antriebsmotor kann z.B. auf der dem im Grundkörper 40 gelagerten Drehkörper 50 abgewandten Seite des Getriebes angeordnet sein bzw. werden. Diese Seite bildet dann die Antriebsseite, wohingegen der im Grundkörper 40 gelagerte Drehkörper 50 die Abtriebsseite des Getriebes bildet.

Die Zahnräder 30 sind in der Mitte zwischen den zwei mit kreisrunder Außenkontur bzw. mit einem quer zur Drehachse 40a kreisrunden Querschnitt ausgebildeten Drehkörpern 50, 50' angeordnet, die durch Verbindungselemente 60 lösbar miteinander verbunden sind und gemeinsam das Ausgangsorgan des Getriebes bilden. Am Drehkörper 50 sind die Distanzkörper 52 angeordnet, welche Öffnungen und Gewindeaufnahmen zur Aufnahme der Verbindungselemente 60 aufweisen. Die Distanzkörper 52 durchqueren berührungsfrei die Öffnungen 32 der Zahnräder 30, so dass die Drehkörper 50, 50' durch die Zahnräder 30 hindurch fest miteinander verbindbar sind. Das durch die beiden miteinander verbundenen Drehkörper 50, 50' gebildete Ausgangsorgan ist in Bezug auf den Grundkörper 40 mit Innenverzahnung 41 um die Drehachse 40a drehbar gelagert.

Die Innenverzahnung 41 des Grundkörpers 40 kämmt mit der Außenverzahnung der Zahnräder 30. Die Achsen der Zahnräder 30 sind parallel zur Drehachse 40a des Grundkörpers 40 angeordnet, jedoch um die Exzentrizität e versetzt. Die Drehkörper 50, 50' sind mit Führungsbahnen 54a, 54b versehen, die eine Linearführung 50b definieren. Die Linearführung 50b ist quer zur Drehachse 40a der Drehkörper 50, 50' orientiert. Jedes Zahnrad 30 ist mit Führungsbahnen 34a, 34b versehen, die eine Linearführung 30b definieren, wobei diese Linearführung 30b quer zur Achse 30a des Zahnrades 30 orientiert ist. An beiden Seiten des Getriebes ist zwischen dem Drehkörper 50 bzw. 50' und dem Zahnrad 30 ein als Ring ausgebildetes Transformationselement 70 angeordnet. Das Transformationselement 70 besitzt in zwei orthogonal zueinander angeordneten Richtungen Führungsflächen 74-1, 74-2 bzw. 74-3, 74-4, die mit den Linearführungen 50b und 30b des jeweiligen Drehkörpers 50, 50' bzw. des Zahnrads 30 derart korrespondieren, dass das Transformationselement 70 gegenüber dem jeweiligen Drehkörper 50, 50' einerseits und gegenüber dem Zahnrad 30 andererseits in zwei senkrecht zueinander verlaufenden Richtungen verschiebbar angeordnet ist. Die eine Linearführung 50b ist am Drehkörper 50 bzw. 50' ausgebildet, während das Transformationselement 70 in der anderen Richtung in der Linearführung 30b am Zahnrad 30 verschiebbar angeordnet ist.

Beide Drehkörper 50, 50' sowie die Transformationselemente 70 besitzen zentrale Öffnungen 51, 51' bzw. 71. Das Eingangsorgan 10 ist an seinen beiden Enden in den zentralen Öffnungen 51, 51' der Drehkörper 50, 50' gelagert. Die zentralen Offnungen 51, 51' bilden an ihren Innenflächen Laufbahnen für Lagerkörper 3. Mittels der Lagerkörper 3 sind die Enden des Eingangsorgans 10 in den zentralen Öffnungen 51, 51' der Drehkörper 50, 50' gelagert. Das Eingangsorgan 10 durchquert kontaktfrei die zentrale Öffnung 71 des Transformationselements 70. Der Innendurchmesser der zentralen Öffnung 71 ist hierbei um mindestens 2e größer als der Außendurchmesser desjenigen Abschnitts des Eingangsorgans 10, welcher die zentrale Öffnung 71 durchquert. Die Führungsbahnen 54a und 54b, mit denen jeder Drehkörper 50, 50' versehen ist, sind an den einander gegenüberliegenden Seiten der Vorsprünge 55a und 55b ausgebildet. Die Vorsprünge 55a und 55b sind als achsensymmetrische Paare ausgebildet und an der Stirnseite des jeweiligen Drehkörpers 50, 50' angeordnet. Die Führungsbahnen 54a und 54b sind direkt an den Vorsprüngen 55a und 55b der Drehkörper 50, 50' ausgebildet, z. B. in Form von zwischen den Vorsprüngen 55a und 55b angeordneten Ausfräsungen. Sie können auch als flache Leisten ausgebildet sein, die an den gegenüberliegenden Seiten der Vorsprünge 55a, 55b befestigt sein können.

Die Führungsbahnen 34a, 34b, mit denen jedes Zahnrad 30 versehen ist, sind an den einander gegenüberliegenden Seiten der Vorsprünge 35b ausgebildet. Sie sind durch mittig gegenüberliegende Paare gebildet, die an der Stirnseite des Zahnrads 30 ausgebildet sind. Die axialen Öffnungen 32 des Zahnrads 30 sind auf einem Kreisbogen gleichmäßig verteilt zwischen den Vorsprüngen 35a, 35b angeordnet. Die Führungsbahnen 34a, 34b sind direkt an den Vorsprüngen 35a, 35b des Zahnrads 30 ausgebildet. Sie können jedoch auch als flache Leisten ausgebildet sein, die fest an den gegenüberliegenden Seiten der Vorsprünge 35a, 35b ausgebildet sind.

Ein Transformationselement 70 umfasst einen Ring bzw. besteht im Wesentlichen aus einem Ring, dessen beide Stirnseiten jeweils zwei Führungsmittel 74-1, 74-2; 74-3, 74-4 mit Mittelachsen 77-X, 77-Y aufweisen. Die Mittelachsen 77-X der Führungsmittel 74-1, 74-2 verlaufen senkrecht zu einer Axialebene 40ab, während die Mittelachsen 77-Y der Führungsmittel 74-3, 74-4 der anderen Stirnseite parallel zur Axialebene 40ab verlaufen. Mit anderen Worten verlaufen die Mittelachsen 77-X der Führungsmittel 74-1, 74-2 der einen Stirnseite senkrecht zu den Mittelachsen 77-Y der Führungsmittel 74-3, 74-4 der anderen Stirnseite. Dabei verlaufen gleichzeitig die Mittelachsen 77-X, 77-Y aller Führungsmittel 74-1, 74-2, 74-3, 74-4 senkrecht zur Drehachse 40a und, genauer ausgedrückt, senkrecht zu Ebenen, in welchen jeweils die Drehachse 40a liegt bzw. welche durch die Drehachse 40a gebildet werden. D.h. eine durch den Ring gebildete, parallel zu den Stirnseiten liegende Ringebene verläuft senkrecht zur Drehachse 40a, wobei die Mittelachsen 77-X, 77-Y der Führungsmittel 74-1, 74-2, 74-3, 74-4 parallel zu dieser Ringebene verlaufen. Die Mittelachsen 77-X bzw. 77-Y der Führungsmittel 71-1, 74-2 bzw. 74-3, 74-4 auf der jeweiligen Seite fallen hier zusammen und sind radial ausgerichtet, könnten allerdings auch mit Abstand zueinander angeordnet sein, wobei sie nicht radial ausgerichtet wären. Der Ring bzw. das Transformationselement 70 weist außerdem durchgehende, axial ausgerichtete Öffnungen 78 auf, die von den Distanzkörpern 52 des Drehkörpers 50 kontaktfrei durchquert sind. Mittels der Distanzkörper 52 sind die beiden das Ausgangsorgan bildenden Drehkörper 50, 50' unverdrehbar miteinander verbunden.

Die Führungsmittel 74-1, 74-2, 74-3, 74-4 weisen Führungsbahnen 74a, 74b; 75a, 75b auf, die in einem senkrecht zur Drehachse betrachteten Querschnitt vorzugsweise trapezförmig sind. Sie könnten jedoch auch konvex oder konkav ausgebildet sein.

Zwischen den Führungsbahnen 54a und 54b der Linearführung 50b des Drehkörpers 50 und den Führungsbahnen 75a, 75b des Transformationselements 70, durch welche das Transformationselement 70 in der linearen Führung 50b verschiebbar angeordnet ist, sind zylindrische Wälzelemente 80 angeordnet. Zwischen den Führungsbahnen 34a und 34b der Linearführung 30b am Zahnrad 30 und den Führungsbahnen 74a, 74b des Transformationselements 70, durch welche das Transformationselement 70 in der Linearführung 30b verschiebbar angeordnet ist, sind ebenfalls zylindrische Wälzelemente 90 angeordnet. In beiden Fällen ist eine Führung des Transformationselements 70 mittels Wälzelementen 80, 90 gewährleistet, wenn es gegenüber dem Zahnrad 30 sowie gegenüber dem Drehkörper 50 und der Drehachse 40a seine die Planetenbewegungen der Zahnräder 30 in Rotationsbewegungen des Ausgangsorgans umwandelnde Oszillationsbewegungen ausübt. An den Führungsmitteln 74-1, 74-2, 74-3, 74-4 des Transformationselements 70 können zur Begrenzung der Führungsbahnen 74a, 74b, 75a, 75b Grenzflächen ausgebildet sein, die die Bewegung der Wälzelemente 80, 90 begrenzen.

Die Innenverzahnung 41 des Grundkörpers 40 besteht aus nadelförmigen Wälzkörpern 41b, die in Axialnuten 41a am Innenumfang des Grundkörpers 40 gelagert sind. Die Axialnuten 41a sind am Innenumfang des Grundkörpers 40 gleichmäßig verteilt. Es handelt sich somit um Zahnräder, deren Zähne vorzugsweise aus liegenden Zylindern bestehen. Die Außenverzahnung 33 des Zahnrads 30 ist entsprechend wellenförmig ausgebildet.

An den Vorsprüngen 55a und 55b des Drehkörpers 50 sind die Distanzkörper 52 angeordnet. Diese Distanzkörper 52 durchqueren mit Spiel die axialen Öffnungen 32 des Zahnrads 30, wobei sie mit axialen Aufnahmen 53 sowie Gewindeaufnahmen 59 versehen sind. Die axialen Aufnahmen 53 und die Gewindeaufnahmen 59 sind zur Aufnahme der Verbindungselemente 60 vorgesehen. Die Verbindungselemente 60 können z. B. als Stifte oder als Schrauben 60 ausgebildet sein. Durch Anziehen der als Schrauben 60 ausgeführten Verbindungselemente 60 definieren die Stirnseiten der Distanzkörper 52 die Lage der beiden Drehkörper 50, 50'.

Im Gegensatz zum Drehkörper 50 weist der Drehkörper 50' keine Distanzkörper 52 auf. Stattdessen weist der Drehkörper 50' axiale Aufnahmen 53' für die Distanzkörper 52 auf.

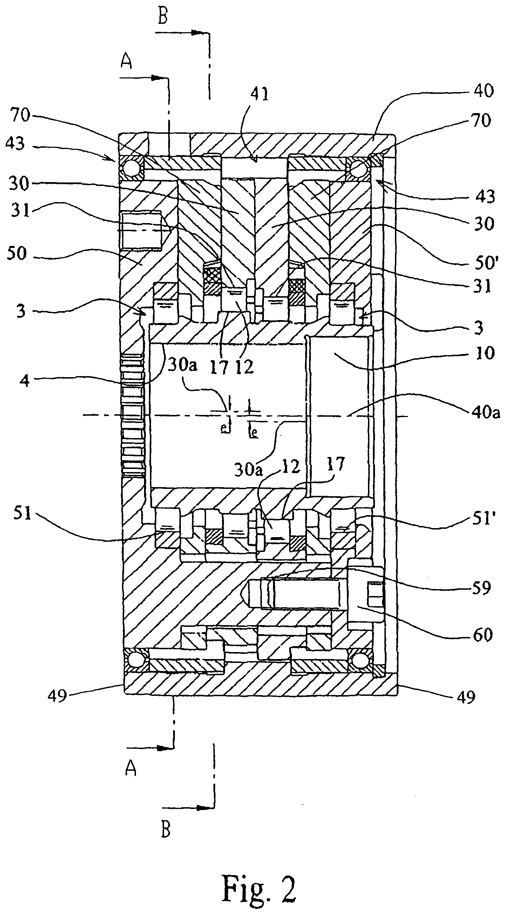

Die Wälzlagerung zwischen dem Grundkörper 40 und dem durch die Drehkörper 50, 50' gebildeten Ausgangsorgan kann durch zylinderförmige Wälzelemente gebildet sein, die auf an dem Grundkörper 40 und dem Drehkörper 50 ausgebildeten, um die Drehachse 40a geschlossen umlaufenden Laufflächen 42a abrollen (Fig. 1). Alternativ kann auch jeweils ein Lager 43 zwischen Grundkörper 40 und den Drehkörpern 50, 50' angeordnet sein (Fig. 2).

Zur Gewichtsverringerung weist das Eingangsorgan 10 eine koaxial zur Drehachse 40a verlaufende durchgehende Öffnung 4 auf. Diese Öffnung 4 kann gleichzeitig zur Aufnahme und/oder Verbindung mit einer Antriebswelle eines Antriebsmotors dienen.

Zwischen Drehkörper 50 und einem nicht näher dargestellten Haltekörper kann eine umlaufende Dichtung vorgesehen sein, die das Eindringen von Verunreinigungen in das Getriebe auf der Abtriebseite unterbindet.

Wichtig ist hervorzuheben, dass bei dem Getriebe grundsätzlich nach Belieben das Eingangsorgan, das Ausgangsorgan oder der Grundkörper Antriebseite, Abtriebseite oder feststehendes Element sein können, ohne dass die prinzipielle Funktion des Getriebes beeinträchtigt wird. Lediglich das Übersetzungsverhältnis verändert sich hierdurch. Bei den Getrieben in den dargestellten Ausführungsbeispielen ist jeweils das Eingangsorgan 10 zum Antrieb durch einen Antriebsmotor vorgesehen. Die Abtriebsseite wird dabei z. B. durch diejenige Seite des Grundkörpers 40 gebildet, auf der der Drehkörper 50 gelagert ist.

Die Erfindung ist insbesondere im Bereich der Herstellung von Planeten- oder Zykloidgetrieben, beispielsweise für den Einsatz in Industrierobotern, für elektrische Parkbremsen in Kraftfahrzeugen oder ganz allgemein für Anwendungen, welche in einem möglichst kompakten Bauraum ein leichtgewichtiges Getriebe mit hohem Übersetzungsverhältnis und hohen Leistungsdaten erfordern, gewerblich anwendbar.

### Bezugszeichenliste

- 3: Lagerkörper
- 4: durchgehende Öffnung am Eingangsorgan
- 10: Eingangsorgan
- 12: Wälzelement
- 17: exzentrischer Abschnitt
- 30: Zahnrad
- 30a: Achse des Zahnrads
- 30b: Linearführung am Zahnrad
- 31: innere Lauffläche
- 32: Öffnung
- 33: Außenverzahnung
- 34a, 34b: Führungsbahnen der Linearführung am Zahnrad
- 35a, 35b: Vorsprünge am Zahnrad
- 40: Grundkörper
- 40a: Drehachse
- 40ab: Ebene
- 41: Innenverzahnung am Grundkörper
- 41a: Axialnuten am Innenumfang des Grundkörpers
- 41b: nadelförmiger Wälzkörper, in den Axialnuten angeordnet
- 42a: Lauffläche
- 43: Lager
- 49: Stirnseite
- 50, 50': Drehkörper
- 50b: Linearführung
- 51, 51': zentrale Öffnung
- 52: Distanzkörper
- 53, 53': axiale Aufnahmen in Distanzkörpern
- 54a, 54b: Führungsbahnen
- 55a, 55b: Vorsprünge
- 59: Gewindeaufnahmen
- 60: Verbindungselement
- 70: Transformationselement
- 71: zentrale Öffnung im Transformationselement
- 74-1: Führungsmittel
- 74-2: Führungsmittel
- 74-3: Führungsmittel
- 74-4: Führungsmittel
- 74a, 74b: Führungsbahnen
- 75a, 75b: Führungsbahnen
- 77-X: Mittelachse
- 77-Y: Mittelachse
- 78: axial ausgerichtete Öffnungen
- 80, 90: Wälzelemente

- e: Exzentrizität

## Patentansprüche

1. Getriebe mit einem eine Innenverzahnung (41) sowie eine Drehachse (40a) aufweisenden hohlzylinderartigen Grundkörper (40) mit Stirnseiten (49), in dem ein angetriebenes Eingangsorgan (10) sowie ein Ausgangsorgan drehbar gelagert sind, wobei das Ausgangsorgan zwei unverdrehbar miteinander verbundene, einen quer zur Drehachse (40a) verlaufenden Querschnitt mit kreisrunder Außenkontur aufweisende Drehkörper (50, 50') mit Distanzkörpern (52) umfasst, zwischen denen mindestens ein Zahnrad (30) sowie mindestens ein Mittel (70) zur Umwandlung von Planetenbewegungen des Zahnrads (30) in Rotationsbewegungen des Ausgangsorgans angeordnet sind,
**dadurch gekennzeichnet, dass**:
- das Mittel (70) die Form eines Rings aufweist, dessen beide Stirnseiten jeweils mindestens zwei Führungsmittel (74-1, 74-2; 74-3, 74-4) mit Mittelachsen (77-X, 77-Y) aufweisen,
- die Mittelachsen (77-X) der Führungsmittel (74-1, 74-2) einer Stirnseite senkrecht zu einer Axialebene (40ab) verlaufen, während die Mittelachsen (77-Y) der Führungsmittel (74-3, 74-4) der anderen Stirnseite parallel zur Axialebene (40ab) verlaufen und
- der Ring durchgehende, axial ausgerichtete Öffnungen (78) aufweist, die von Distanzkörpern (52) kontaktfrei durchquert sind.

2. Getriebe nach Anspruch 1,
**dadurch gekennzeichnet,**
**dass** die Führungsmittel (74) mindestens eine Führungsbahn (74a, 74b; 75a, 75b) aufweisen.

3. Getriebe nach Anspruch 2,
**dadurch gekennzeichnet,**
**dass** die Führungsbahnen (74a, 74b; 75a, 75b) in einem senkrecht zur Drehachse (40a) betrachteten Querschnitt trapezförmig oder konvex oder konkav ausgebildet sind.

4. Getriebe nach einem der Ansprüche 1 bis 3,
**dadurch gekennzeichnet,**
**dass** die Mittelachsen (77-X, 77-Y) der Führungsmittel (74-1, 74-2; 74-3, 74-4) auf der jeweiligen Stirnseite parallel zueinander angeordnet sind oder zusammenfallen.

## Claims

1. A transmission, having a hollow-cylindrical main body (40) with end faces (49) which has an internal toothing (41) and a rotary axis (40a) and in which main body a driven input member (10) and an output member are rotatably supported, and the output member includes two rotary bodies (50, 50') with spacers (52), the rotary bodies being connected non-rotatably to one another and having a circular outer contour transversely to the rotary axis (40a), between which rotary bodies at least one gear wheel (30) and at least one means (70) for converting planetary motions of the gear wheel into rotary motions of the output member are disposed,
**characterized in that**
- the means (70) has the form of a ring, both end faces of which each have at least two guide means (74-1, 74-2; 74-3, 74-4) with center axes (77-X, 77-Y);
- the center axes (77-X) of the guide means (74-1, 74-2) of one end face extend perpendicular to an axial plane (40ab), while the center axes (77-Y) of the guide means (74-3, 74-4) of the other end face extend parallel to the axial plane (40ab); and
- the ring has continuous, axially oriented openings (78), through which spacers (52) pass without contacting them.

2. The transmission as recited in claim 1,
**characterized in that**
the guide means (74) have at least one guideway (74a, 74b; 75a, 75b).

3. The transmission as recited in claim 2,
**characterized in that**
the guideways (74a, 74b; 75a, 75b) are embodied trapezoidally or in convex or concave form in a cross section viewed perpendicular to the rotary axis (40a).

4. The transmission as recited in one of claims 1-3,
**characterized in that**
the center axes (77-X, 77-Y) of the guide means (74-1, 74-2; 74-3, 74-4) are disposed parallel to one another on the respective end face or coincide with one another.

## Revendications

1. Engrenage muni d'un corps de base (40) en forme de cylindre creux présentant une denture intérieure (41) et un axe de rotation (40a) avec des faces frontales (49) dans lequel un organe d'entrée commandé (10) ainsi qu'un organe de sortie sont installés d'une manière rotative où l'organe de sortie comprend deux corps rotatifs (50, 50') avec des corps d'écartement (52) sans possibilité de rotation reliés entre eux présentant une section transversale s'étendant transversalement vers l'axe de rotation (40a) avec un contour extérieure circulaire, entre eux au minimum une roue dentée (30) et aussi au minimum un agent (70) de conversion des mouvements planétaires de la roue dentée (30) placés en mouvements rotatifs de l'organe de sortie,
Est caractérisé de sorte que
- l'agent (70) présente la forme d'un anneau dont les deux faces frontales présentent respectivement au minimum deux moyens de guidage (74-1, 74-2; 74-3, 74-4) avec des axes médianes (77-X, 77-Y),
- les axes médianes (77-X) des moyens de guidage (74-1, 74-2) d'une face frontale s'étendent d'une manière perpendiculaire vers un plan axial (40ab), tandis que les axes médianes (77-Y) des moyens de guidage (74-3, 74-4) de l'autre face frontale s'étendent parallèlement au plan axiale (40ab) et que
- l'anneau présente des ouvertures (78) alignées axialement d'une manière continue traversées par des corps d'écartements (52) sans contact.

2. Engrenage selon revendication 1,
Est caractérisé de sorte que
Les moyens de guidage (74) présentent au minimum une voie de guidage (74a, 74b; 75a, 75b).

3. Engrenage selon revendication 2,
Est caractérisé de sorte que
Les voies de guidage (74a, 74b; 75a, 75b) sont formées d'une manière trapézoïdale ou convexe ou concave en une section transversale perpendiculaire à l'axe de rotation (40a).

4. Engrenage selon revendications 1 jusqu'à 3,
Est caractérisé de sorte que
Les axes médianes (77-X, 77-Y) des moyens de guidage (74-1, 74-2; 74-3, 74-4) sont placés entre eux parallèlement ou se rejoignent sur la face frontale respective.
